# EUROPÄISCHE PATENTSCHRIFT

(11) **EP 0 913 333 B1**
(45) Veröffentlichungstag und Bekanntmachung des Hinweises auf die Patenterteilung: **30.08.2000**
(21) Anmeldenummer: 97118490.8
(22) Anmeldetag: 24.10.1997
(51) Int. Cl.: B65D 8/02

(54) **Mehrwegfass aus Metallblech**
Re-usable sheet metal barrel
Tonneau réutilisable en tôle métallique

(43) Veröffentlichungstag der Anmeldung: 06.05.1999
(73) Patentinhaber: Schütz-Werke GmbH & Co. KG., D-56242 Selters (DE)
(72) Erfinder: Schütz, Udo, 56242 Selters (DE)
(74) Vertreter: Pürckhauer, Rolf, Dipl.-Ing.

(56) Entgegenhaltungen:
- WO-A-80/00431
- DE-A- 3 539 656
- DE-U- 9 011 586
- DE-U- 9 313 878
- FR-A- 1 367 870

## Beschreibung

Die Erfindung betrifft Mehrwegfässer aus Metallblech, die für den anfänglichen Gebrauch als Spundfässer ausgebildet sind, die einen mit dem Faßmantel fest verbundenen Oberboden mit einem Füll- und Entleerspund aufweisen und die für den weiteren Gebrauch zu Deckelfässern mit Spunddeckel oder einfachem Deckel mit Spannringverschluß zur Befestigung des Deckels auf dem nach außen gerollten Öffnungsrand des Faßmantels der ursprünglichen Spundfässer unter Zwischenschaltung einer in den Deckelrand eingebrachten Dichtung rekonditionierbar sind, wobei bei dem Deckelfaß der von dem Spundfaß abgetrennte Oberboden als Spunddeckel dient (DE 35 39 656 C2).

Die strengen gesetzlichen Umweltschutzvorschriften erfordern den Übergang von Einweg- auf Mehrweggebinde wie beispielsweise Fässer aus Stahl oder Kunststoff, die Umstellung auf Gebinde mit größerem Volumen mit dem Ziel einer Verringerung der Restmengen und die Entwicklung neuer Mehrweggebinde, die im Hinblick auf die Entlastung der Umwelt von schädlichen Stoffen rekonditioniert und für die Rekonditionierung sowie für eine ordnungsgemäße Entsorgung durch eine schadstofffreie Vernichtung z.B. durch Verbrennen oder für eine Wiederaufbereitung des Herstellungsmaterials optimal restentleert und leicht gereinigt werden können.

Die Entwicklung von rekonditionierbaren Mehrwegfässern aus Stahlblech führte zu den gattungsgemäßen Mehrwegfässern, die mit verhältnismäßig geringem Aufwand nach dem ersten Transport bzw. der ersten Lagerung von umweltgefährdendem Flüssiggut einer hohen Gefahrenklasse nach der Entnahme des gefährlichen Flüssiggutes für eine weitere Verwendung als Transport- und Lagerfässer für granulat- und pulverförmige sowie pasteuse Stoffe einer niedrigen Gefahrenklasse zu Deckelfässern umgerüstet werden können, die sowohl das Eindringen als auch das Entnehmen des Füllgutes erleichtern und die die Möglichkeit einer direkten Einwirkung auf den Behälterinhalt z.B. mit einem einfachen Rührwerk bieten im Gegensatz zu Spundfässern mit einem Oberboden, der an den Faßmantel angefalzt ist, so daß das Füllgut nur mit einem durch den Füll- und Entleerspund in das Faß eingesetzten, aufwendigen Rührwerk, das z.B. als Faltpropeller ausgebildet ist, umgerührt werden kann.

Bei dem aus der DE 35 39 656 C2 bekannten Spundfaß ist der Spunddeckel unter Zwischenlegen einer Dichtung auf den zu einem Randwulst umgebördelten Öffnungsrand des Faßmantels aufgesetzt. Der Spunddeckel ist von einem Falzdeckel überfangen, der im Bereich der Spunde des Spunddeckels Ausnehmungen aufweist und dessen Rand den Spunddeckel fest und sicher hintergreift und um den Randwulst des Faßmantels gefalzt ist. Bei diesem Faß wird zunächst der Spunddeckel wie ein Deckel eines Deckelfasses auf den Rand des Faßmantels aufgelegt, und die eigentliche, durch einen Falz bewirkte hochbelastbare Verbindung wird durch den Falz des den Spunddeckel überfangenden Falzdeckels erreicht. Damit sind zunächst die Stabilität und die Belastbarkeit des Kopfbereiches eines üblichen Spundfasses erzielt, wobei der gesonderte Falzdeckel durch seine Stabilität die Belastbarkeit noch weiter anhebt. Nach einer dessen Zerstörung bewirkenden Entfernung des Falzdeckels läßt sich bei verschlossenem Spund dieses Spundfaß wie ein übliches Deckelfaß handhaben, dessen Deckel sowohl abnehmbar ist als auch nach dem Aufsetzen durch einen üblichen Spannring wieder anpreßbar und abdichtbar ist.

Die wesentlichen Nachteile dieses bekannten Spundfasses, das zu einem Deckelfaß mit abnehmbarem Spunddeckel rekonditionierbar ist, sind darin zu sehen, daß beim Erstgebrauch des Fasses als Spundfaß ein gesonderter, das Faß verteuernder Falzdeckel zur Befestigung des Spunddeckels auf dem Öffnungsrand des Faßmantels erforderlich ist und daß beim Rekonditionieren des Spundfasses zu einem Deckelfaß der zwangsweise zerstörte Falzdeckel als Blechabfallprodukt anfällt, das mit Kosten entsorgt oder ggf. wiederaufbereitet werden muß.

Die DE 90 11 586 U beschreibt ein als Mehrwegfaß verwendbares Weithals-Stahlfaß mit einem abnehmbaren Deckel, der als einfacher Deckel oder Spunddeckel ausgebildet ist und mit einem Spannring auf dem Öffnungsrand des Faßmantels befestigt wird.

Der Erfindung liegt die Aufgabe zugrunde, ein preiswertes Mehrwegfaß aus Metallblech zu entwickeln, das nach dem Erstgebrauch als Spundfaß zum Transport und zur Lagerung von umweltgefährdenden Flüssiggütern einer hohen Gefahrenklasse für den weiteren Gebrauch kostengünstig zu einem Deckelfaß für pulver- und granulatförmige sowie pasteuse Stoffe und ggf. auch für Flüssigkeiten einer niedrigen Gefahrenklasse rekonditioniert werden kann.

Diese Aufgabe ist erfindungsgemäß gelöst durch das Mehrwegfaß aus Metallblech mit den Merkmalen des Patentanspruchs 1.

Die Unteransprüche beinhalten vorteilhafte und zweckmäßige Weiterbildungen der Erfindung.

Das erfindungsgemäße Mehrwegfaß aus Metallblech zeichnet sich dadurch aus, daß es nach dem Erstgebrauch als Spundfaß für Stoffe einer hohen Gefahrenklasse für den weiteren Gebrauch zu einem Deckelfaß für Stoffe einer niedrigeren Gefahrenklasse ohne den Anfall von Abfallblech kostengünstig rekonditioniert werden kann. Ferner können mit dem neuen Faß in der am meisten benutzten Ausführung sowohl als Spundfaß als auch als Deckelfaß mit einem Fassungsvermögen von 213 Litern nach DIN 6643 aufgrund der günstigen äußeren Abmessungen ISO-Container optimal beladen werden.

Die Erfindung ist nachstehend anhand von Zeichnungsfiguren erläutert, die im einzelnen folgendes zeigen:
- Fig. 1: einen Längsschnitt des als Spundfaß ausgebildeten Mehrwegfasses und jeweils in vergrößerten Ausschnitten,
- Fig. 2: den Oberboden des Spundfasses,
- Fig. 3: den vom Faßmantel abgetrennten Oberboden beim Rekonditionieren des Spundfasses zu einem Deckelfaß und
- Fig. 4: das Deckelfaß mit einem mittels eines Spannringverschlusses auf dem Öffnungsrand des Faßmantels gesicherten Spunddeckel sowie
- Fig. 5: einen Längsschnitt des als Deckelfaß ausgebildeten Mehrwegfasses.

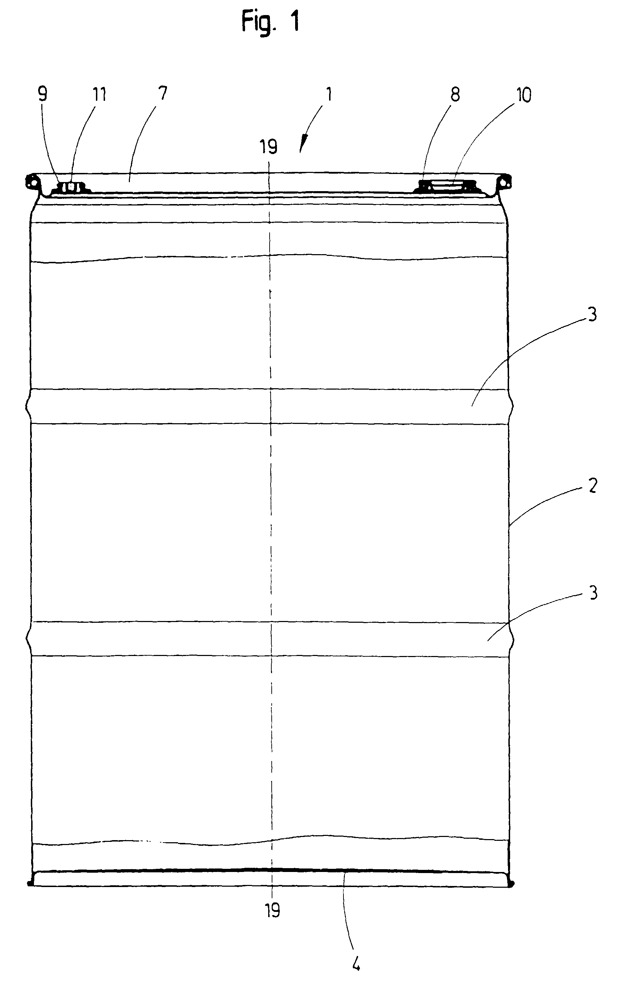

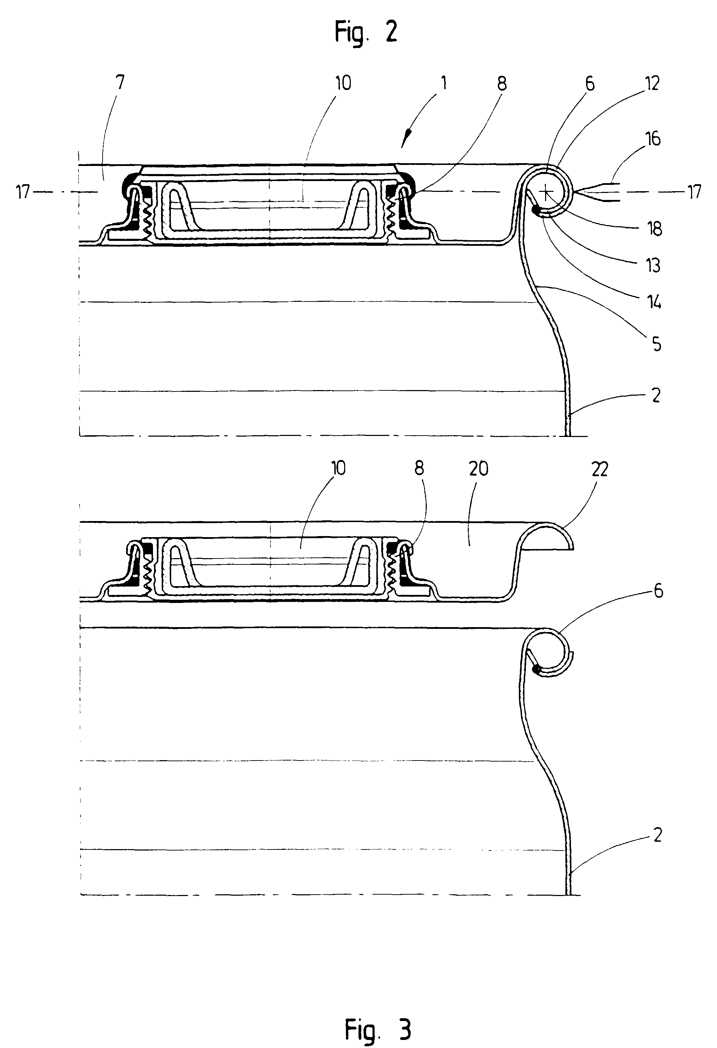

Das in den Figuren 1 und 2 dargestellte Spundfaß 1 aus Stahlblech besitzt einen zylindrischen Faßmantel 2 mit Roll- und Versteifungssicken 3, der unten durch einen aufgefalzten Unterboden 4 dicht verschlossen ist. Der obere Abschnitt 5 des Faßmantels 2 ist zum Öffnungsrand 6 des Faßmantels 2 eingezogen, der als ein nach außen gerollter Rollrand ausgebildet ist.

Der Oberboden 7 des Spundfasses 1 weist einen Füll- und Entleerspund 8 sowie einen Be- und Entlüftungsspund 9 auf, die durch als Schraubstopfen ausgebildete Spundstopfen 10, 11 verschließbar sind. Der Oberboden 7 liegt mit seinem gerollten Außenrand 12 auf dem Öffnungsrand 6 des Faßmantels 2 auf und ist mit diesem zusammengefalzt. Der gerollte Öffnungsrand 6 des Faßmantels 2 und der entsprechend gerollte Außenrand 12 des Oberbodens 7 sind im Bereich ihrer Endabschnitte 13, 14 dicht miteinander verschweißt, wobei der Oberboden 7 durch ein zusätzlich zwischen den beiden Rändern 6, 12 befindliches Dichtungsmaterial flüssigkeitsdicht gegen den Faßmantel 2 abgedichtet werden kann.

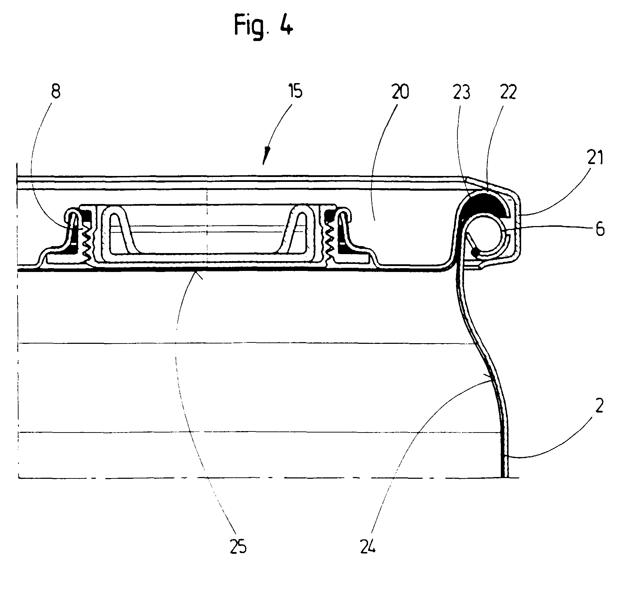

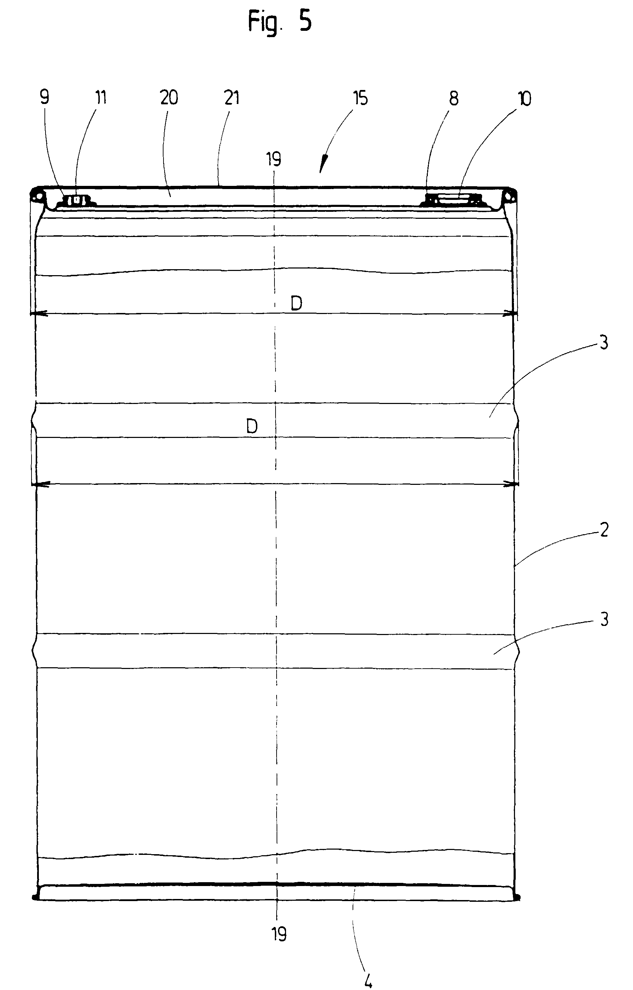

Beim Rekonditionieren des Spundfasses 1 nach den Fign. 1 und 2 zu einem Deckelfaß 15 nach den Fign. 4 und 5 wird entsprechend der Darstellung in Fig. 3 der Oberboden 7 mittels einer Trennvorrichtung 16, z.B. einem rotierenden Messer, abfallfrei von dem Öffnungsrand 6 des Faßmantels 2 abgeschnitten, wobei der Trennschnitt 17-17 in Höhe bzw. durch den Bereich des Mittelpunktes 18 des gerollten Öffnungsrandes 6 des Faßmantels 2 senkrecht zur Faßlängsachse 19-19 geführt ist.

Der von dem Spundfaß 1 abgetrennte Oberboden 7 dient als Spunddeckel 20, der im geschlossenen Zustand des Deckelfasses 15 mittels eines Spannringes 21 unter Zwischenschaltung einer in den Deckelrand 22 eingebrachten Dichtung 23 auf dem Öffnungsrand 6 des Faßmantels 2 gesichert wird.

Das Deckelfaß 15 kann mit einer auch als Inliner bezeichneten austauschbaren Innenhülle 24 aus einer Kunststoffolie ausgestattet sein, die über den Öffnungsrand 6 des Faßmantels 2 gezogen und zwischen diesem und der Deckeldichtung 23 eingeklemmt wird.

Ferner kann der Spunddeckel 20 des Deckelfasses 15 mit einer Innenauskleidung 25 aus einer Kunststoffolie oder einer Metall-Kunststoff-Verbundfolie versehen sein.

Gegebenenfalls besteht die Möglichkeit, in das Spundfaß 1 vor dem Aufschweißen des Oberbodens 7 auf den Öffnungsrand 6 des Faßmantels 2 eine Innenhülle 24 einzubringen und den Oberboden 7 mit einer Innenauskleidung 25 auszustatten.

Zur Unterbringung von Spundfässern 1 und Deckelfässern 15 in einem ISO-Container ist vorzugsweise bei der am meisten verbreiteten Faßausführung mit einem Volumen von 213 Litern nach DIN 6643 der obere Abschnitt 5 des Faßmantels 2 gegen den Öffnungsrand 6 desselben derart eingezogen, daß der Außendurchmesser D am Spannring 21 einschließlich dessen Hebelverschluß gleich dem oder kleiner als der Durchmesser D der Roll- und Versteifungssicken 3 des Faßmantels 2 von 585 Millimetern ist.

## Patentansprüche

1. Mehrwegfaß aus Metallblech, das für den anfänglichen Gebrauch als Spundfaß (1) ausgebildet ist, das einen mit dem Faßmantel (2) fest verbundenen Oberboden (7) mit einem Füll- und Entleerspund (8) aufweist und das für den weiteren Gebrauch zu einem Deckelfaß (15) mit Spunddeckel (20) oder einfachem Deckel mit Spannringverschluß zur Befestigung des Deckels (20) auf dem nach außen gerollten Öffnungsrand (6) des Faßmantels (2) des ursprünglichen Spundfasses (1) unter Zwischenschaltung einer in den Deckelrand (22) eingebrachten Dichtung (23) rekonditionierbar ist, wobei bei dem Deckelfaß (15) der von dem Spundfaß (1) abgetrennte Oberboden (7) als Spunddeckel (20) dient, dadurch gekennzeichnet, daß der obere Abschnitt (5) des Faßmantels (2) zum Öffnungsrand (6) des Mantels (2) eingezogen ist oder sich zu diesem verjüngt, daß bei der Ausbildung als Spundfaß (1) der Oberboden (7) mit seinem gerollten Außenrand (12) auf dem Öffnungsrand (6) des Faßmantels (2) aufliegt und mit diesem zusammengefalzt ist und der Außenrand (12) des Oberbodens (7) und der Öffnungsrand (6) des Faßmantels (2) miteinander verschweißt sind und daß der bei dem rekonditionierten Deckelfaß (15) als Spunddeckel (20) dienende Oberboden (7) von dem Spundfaß (1) abfallfrei abgetrennt ist.

2. Mehrwegfaß nach Anspruch 1, dadurch gekennzeichnet, daß beim Spundfaß (1) der gerollte Öffnungsrand (6) des Faßmantels (2) und der entsprechend gerollte Außenrand (12) des Oberbodens (7) im Bereich ihrer Endabschnitte (13, 14) miteinander verschweißt sind.

3. Mehrwegfaß nach einem der Ansprüche 1 und 2, gekennzeichnet durch eine Abdichtung des Außenrandes (12) des mit dem Öffnungsrand (6) des Faßmantels (2) verschweißten Oberbodens (7) des Spundfasses (1) mittels eines zwischen beide Ränder (12, 6) eingebrachten Dichtmaterials.

4. Mehrwegfaß nach Anspruch 1, dadurch gekennzeichnet, daß der Trennschnitt (17-17) beim Abtrennen des Oberbodens (7) vom Faßmantel (2) des Spundfasses (1) beim Rekonditionieren desselben zu einem Deckelfaß (15) in Höhe bzw. durch den Bereich des Mittelpunktes (18) des gerollten Öffnungsrandes (6) des Faßmantels (2) senkrecht zur Faßlängsachse (19-19) geführt ist.

5. Mehrwegfaß nach einem der Ansprüche 1 bis 4, dadurch gekennzeichnet, daß zwecks Unterbringung der Spundfässer (1) und der Deckelfässer (15) in einem ISO-Container der obere Abschnitt (5) des Faßmantels sich gegen den Öffnungsrand (6) des Mantels derart verjüngt, daß der Außendurchmesser (D) am Spannring (21) einschließlich dessen Hebelverschluß gleich dem oder kleiner als der Durchmesser (D) der in den zylindrischen Faßmantel (2) eingeformten, nach außen gewölbten Roll- und Verstärkungssicken (3) ist.

6. Mehrwegfaß nach Anspruch 5, dadurch gekennzeichnet, daß bei Spundfässern (1) bzw. Deckelfässern (15) mit einem Volumen von 213 Litern nach DIN 6643 der Durchmesser (D) der Roll- und Versteifungssicken (3) des Faßmantels (2) sowie des Spannringes (21) einschließlich dessen Hebelverschluß gleich oder kleiner als 585 Millimeter ist.

7. Mehrwegfaß nach einem der Ansprüche 1 bis 6, dadurch gekennzeichnet, daß das Spundfaß (1) und/oder das Deckelfaß (15) mit einer Innenhülle (24) aus einer Kunststoffolie oder einer Metall-Kunststoff-Verbundfolie ausgestattet ist bzw. sind.

8. Mehrwegfaß nach einem der Ansprüche 1 bis 7, gekennzeichnet durch eine Innenauskleidung (25) des Oberbodens (7) des Spundfasses (1) und/oder des Deckels (20) des Deckelfasses (15) aus einer Kunststoffolie oder einer Metall-Kunststoff-Verbundfolie.

## Claims

1. Reusable sheet metal barrel, configured for initial use as a spigoted barrel (1), having a top section (7) with a filling and emptying spigot (8) and firmly connected to the barrel casing (2), and which is reconditionable for further use as a lidded barrel (15) with a spigoted cover (20) or simple cover with tension ring seal for securing the cover (20) to the outwardly rolled opening rim (6) of the barrel casing (2) of the original spigoted barrel (1) by interposing a gasket (23) introduced into the cover rim (22), in the case of the lidded barrel (15) the top section (7) detached from the spigoted barrel (1) serving as the spigoted cover (20), **characterised in that** the upper section (5) of the barrel casing (2) is drawn in to the opening rim (6) of the casing (2) or is tapered to this, in that in the configuration as a spigoted barrel (1), the top section (7) sits with its rolled outer edge (12) on the opening rim (6) of the barrel casing (2), and is seamed together with this, and the outer rim (12) of the top section (7) and the opening rim (6) of the barrel casing (2) are welded together, and in that with the reconditioned lidded barrel (15) the top section (7) serving as spigoted cover (20) is detached scrap-free from the spigoted barrel (1).

2. Reusable barrel according to claim 1, **characterised in that** in the case of the spigoted barrel (1), the rolled opening rim (6) of the barrel casing (2) and the correspondingly rolled outer rim (12) of the top section (7) are welded together in the area of their end sections (13,14).

3. Reusable barrel according to one of claims 1 and 2, **characterised by** a sealing of the outer rim (12) of the top section (7) of the spigoted barrel (1), welded with the opening rim (6) of the barrel casing (2), by means of a sealing material introduced between both edges (12, 6).

4. Reusable barrel according to claim 1, **characterised in that** the separating cut (17-17), on detaching the top section (7) from the barrel casing (2) of the spigoted barrel (1) in reconditioning the latter as a lidded barrel (15), is guided at the level of or through the area of the middle point (18) of the rolled opening rim (6) of the barrel casing (2), perpendicular to the barrel longitudinal axis (19-19).

5. Reusable barrel according to one of claims 1 to 4, **characterised in that** for the purpose of housing the spigoted barrels (1) and the lidded barrels (15) in an ISO container, the upper section (5) of the barrel casing is tapered towards the opening rim (6) of the casing in such a way that the outer diameter (D) on the tensioning ring (21) including its lever closure is equal to or smaller than the diameter (D) of the outwardly curved rolling and reinforcing beads (3) moulded into the cylindrical barrel casing (2).

6. Reusable barrel according to claim 5, **characterised in that** in the case of spigoted barrels (1) or lidded barrels (15) with a volume of 213 litres according to DIN 6643, the diameter (D) of the rolling and reinforcement beads (3) of the barrel casing (2) and the tension ring (21) including its lever closure is equal to or smaller than 585 millimetres.

7. Reusable barrel according to one of claims 1 to 6, **characterised in that** the spigoted barrel (1) and/or the lidded barrel (15) is/are equipped with an inner shell (24) formed from plastics film or a metal-plastics composite film.

8. Reusable barrel according to one of the claims 1 to 7, **characterised by** an interior lining (25) of the top section (7) of the spigoted barrel (1) and/or the cover (20) of the lidded barrel (15), which lining is formed from a plastics film or a metal-plastics composite film.

## Revendications

1. Tonneau réutilisable, en tôle métallique, qui est constitué pour le premier usage en tonneau (1) à bondon, qui a un plateau (7) supérieur relié rigidement à la surface latérale (2) du tonneau et ayant un bondon (8) de remplissage et de vidange et qui, pour l'usage ultérieur, peut être reconditionné, avec interposition d'une garniture (23) d'étanchéité mise dans le bord (22) du couvercle, en un tonneau (15) à couvercle ayant un couvercle (20) à bondon ou un couvercle simple à fermeture à collier de serrage pour la fixation du couvercle (20) sur le bord (6) de l'ouverture roulé vers l'extérieur de la surface latérale (2) du tonneau (1) à bondon d'origine, le plateau (7) supérieur séparé du tonneau (1) à bondon servant pour le tonneau (15) à couvercle de couvercle (20) à bondon, caractérisé en ce que la partie (5) supérieure de la surface (2) latérale du tonneau est rentrée vers le bord (6) de l'ouverture de la surface (2) latérale ou se rétrécit vers celui-ci, en ce que, lors de la constitution en tonneau (1) à bondon, le plateau (7) supérieur s'applique par son bord (12) roulé extérieur au bord (6) de l'ouverture de la surface latérale (2) du tonneau et est serti avec celui-ci et le bord (12) extérieur du plateau (7) supérieur et le bord (6) de l'ouverture de la surface latérale (2) du tonneau sont soudés entre eux, et en ce que le plateau (7) supérieur servant pour le tonneau (15) à couvercle reconditionné de couvercle (20) à bondon est séparé sans chute du tonneau (1) à bondon.

2. Tonneau réutilisable suivant la revendication 1, caractérisé en ce que, pour le tonneau (1) à bondon, le bord (6) roulé de l'ouverture de la surface latérale (2) du tonneau et le bord (12) roulé extérieur correspondant du plateau (7) supérieur sont soudés entre eux dans la région de leurs parties (13, 14) d'extrémité.

3. Tonneau réutilisable suivant l'une des revendications 1 et 2, caractérisé par une étanchéité du bord (12) extérieur du plateau (7) supérieur du tonneau (1) à bondon, plateau (7) qui est soudé au bord (6) de l'ouverture de la surface latérale (2) du tonneau, au moyen d'un matériau d'étanchéité inséré entre les deux bords (12, 6).

4. Tonneau réutilisable suivant la revendication 1, caractérisé en ce que la partie (17-17) découpée lors de la séparation du plateau (7) supérieur de la surface latérale (2) du tonneau (1) à bondon est, lors du reconditionnement de celui-ci en un tonneau (15) à couvercle, guidée, en hauteur et par la partie du point (18) médian du bord (6) roulé de l'ouverture de la surface latérale (2) du tonneau, perpendiculairement à l'axe (19-19) longitudinal du tonneau.

5. Tonneau réutilisable suivant l'une des revendications 1 à 4, caractérisé en ce qu'en vue de loger les tonneaux (1) à bondon et les tonneaux (15) à couvercle dans un conteneur ISO, la partie (5) supérieure de la surface latérale du tonneau se rétrécit vers le bord (6) de l'ouverture de la surface latérale de façon que le diamètre (D) extérieur au collier (21) de serrage, y compris sa fermeture à levier, soit égal ou inférieur au diamètre (D) de la moulure (3) roulée et de renforcement qui est courbée vers l'extérieur et qui est formée dans la surface latérale (2) cylindrique du tonneau.

6. Tonneau réutilisable suivant la revendication 5, caractérisé en ce que pour des tonneaux (1) à bondon et des tonneaux (15) à couvercle ayant un volume de 213 litres suivant la norme DIN 6643, le diamètre (D) de la moulure (3) roulée et de renforcement de la surface (2) du tonneau ainsi que du collier (21) de serrage y compris sa fermeture à levier, est égal ou inférieur à 585 mm.

7. Tonneau réutilisable suivant l'une des revendications 1 à 6, caractérisé en ce que le tonneau (1) à bondon et/ou le tonneau (15) à couvercle est ou sont munis d'une enveloppe (24) intérieure en une feuille de matière plastique ou en une feuille composite de métal et de matière plastique.

8. Tonneau réutilisable suivant l'une des revendications 1 à 7, caractérisé par un revêtement (25) intérieur du plateau (7) supérieur du tonneau (1) à bondon et/ou du couvercle (20) du tonneau (15) à couvercle, en une feuille de matière plastique ou en une feuille composite en métal et en matière plastique.
